# FASCICULE DE BREVET EUROPEEN

(11) **EP 2 466 707 B1**
(45) Date de publication et mention de la délivrance du brevet: **10.04.2013**
(21) Numéro de dépôt: 11290554.2
(22) Date de dépôt: 02.12.2011
(51) Int. Cl.: H02G 3/18

(54) **Boite de sol à encastrer dans une dalle de béton ou dans un parquet technique**
Bodenkasten zum Einbau in eine Betonplatte oder ein technisches Parkett
Ground box intended for being recessed in a concrete slab or in a technical parquet floor

(30) Priorité: 20.12.2010 FR 1004966
(43) Date de publication de la demande: 20.06.2012
(73) Titulaire: Legrand France, 87000 Limoges (FR); Legrand SNC, 87000 Limoges (FR)
(72) Inventeur: Caille, Jean-Loup, 87510 Peyrilhac (FR)
(74) Mandataire: Orsini, Fabienne

(56) Documents cités:
- DE-A1- 2 111 969
- DE-A1- 3 403 053
- US-A- 2 847 140

## Description

### DOMAINE TECHNIQUE AUQUEL SE RAPPORTE L'INVENTION

La présente invention concerne de manière générale le domaine des installations électriques.

Elle concerne plus particulièrement une boîte de sol pour appareillage électrique, telle que définie dans le préambule de la revendication 1.

### ARRIERE-PLAN TECHNOLOGIQUE

On connaît notamment du document DE 34 03 053 une boîte de sol telle que précitée, qui est adaptée à être fixée à une paroi de sol avant que ne soit coulée une dalle de béton sur cette paroi de sol, tout autour de cette boîte de sol.

Dans cette boîte de sol, la face intérieure du manchon est taraudée et la face extérieure de la bague est filetée, de telle manière que la bague peut être vissée à l'intérieur du manchon. En vissant ou dévissant la bague, il est alors possible d'ajuster la hauteur totale de la boîte de sol en fonction de l'épaisseur souhaitée de la dalle de béton à couler.

Une fois la dalle coulée, il est alors possible de fixer le support d'un appareillage électrique sur la boîte de sol, de telle manière qu'il prenne appui par sa face arrière contre le bord d'extrémité haute de la bague.

L'inconvénient majeur d'une telle boîte de sol est qu'elle n'est pas adaptable, en ce sens qu'il n'est pas possible de l'utiliser autrement qu'avec une dalle de béton coulée.

Par conséquent, si la paroi de sol n'est pas destinée à être recouverte d'une telle dalle en béton mais est destinée à être recouverte d'un plancher technique, il est nécessaire d'utiliser une autre boîte d'architecture différente.

Ce doublement de références se fait alors au détriment des coûts de fabrication et de stockage des boîtes de sol.

### OBJET DE L'INVENTION

Afin de remédier à l'inconvénient précité de l'état de la technique, la présente invention propose une nouvelle boîte de sol utilisable tant pour les dalles de béton coulées que pour les planchers techniques.

Plus particulièrement, on propose selon l'invention une boîte de sol telle que définie dans la revendication 1.

Grâce aux moyens de vissage, les faces de butées sont situées à une distance l'une de l'autre qui est réglable à la faveur du vissage de la bague sur le manchon.

Ainsi, lorsque la boîte de sol est engagée dans une ouverture traversante pratiquée dans le plancher technique, ces faces de butées forment ensemble une mâchoire adaptée à se refermer de part et d'autre de ce plancher technique, autour de l'ouverture traversante, ce qui permet de bloquer rigidement la boîte de sol dans cette ouverture.

Par ailleurs, lorsque la boîte de sol est fixée à une paroi de sol, ces faces de butée ne gênent en rien le coulage d'une dalle de béton.

Par conséquent, la boîte de sol selon l'invention est utilisable tant dans les dalles de béton coulées que dans les planchers techniques.

D'autres caractéristiques avantageuses et non limitatives de la boîte de sol conforme à l'invention sont définies dans les revendications 2 à 14.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective éclatée d'une boîte de sol selon l'invention ;
- la figure 2 est une vue schématique en perspective assemblée de la boîte de sol de la figure 1 ;
- la figure 3 est une vue schématique en plan de la bague de la boîte de sol de la figure 1 ;
- la figure 4 est une vue schématique en perspective de la boîte de sol de la figure 1 installée dans un plancher technique, et d'un appareillage électrique prêt à être installé dans cette boîte de sol ;
- les figures 5 et 6 sont des vues schématiques en coupe de la boîte de sol de la figure 1 installée dans deux planchers techniques d'épaisseurs différentes ; et
- les figures 7 et 8 sont des vues schématiques en coupe de la boîte de sol de la figure 1 fixée sur une paroi de sol et autour de laquelle ont été coulées deux dalles de béton d'épaisseurs différentes.

Dans la description, les termes « avant » et « arrière » seront utilisés par rapport à la surface du sol, l'avant désignant donc le côté tourné vers le haut et l'arrière désignant le côté tourné vers le bas.

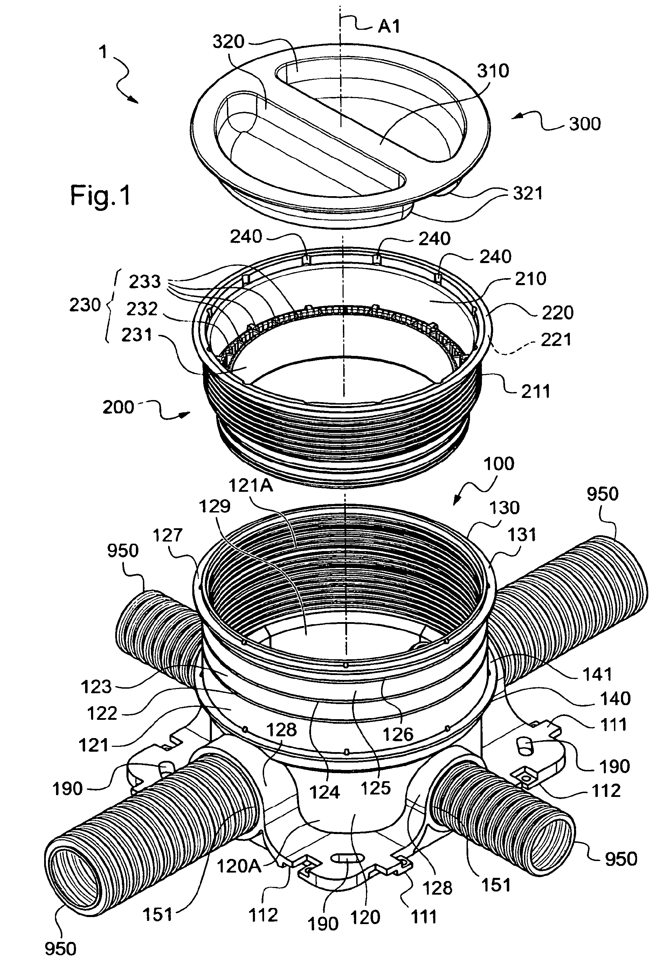

Sur les figures 1 à 8, on a représenté schématiquement une boîte de sol 1 dite d'encastrement, qui est plus particulièrement destinée à la construction de bâtiments.

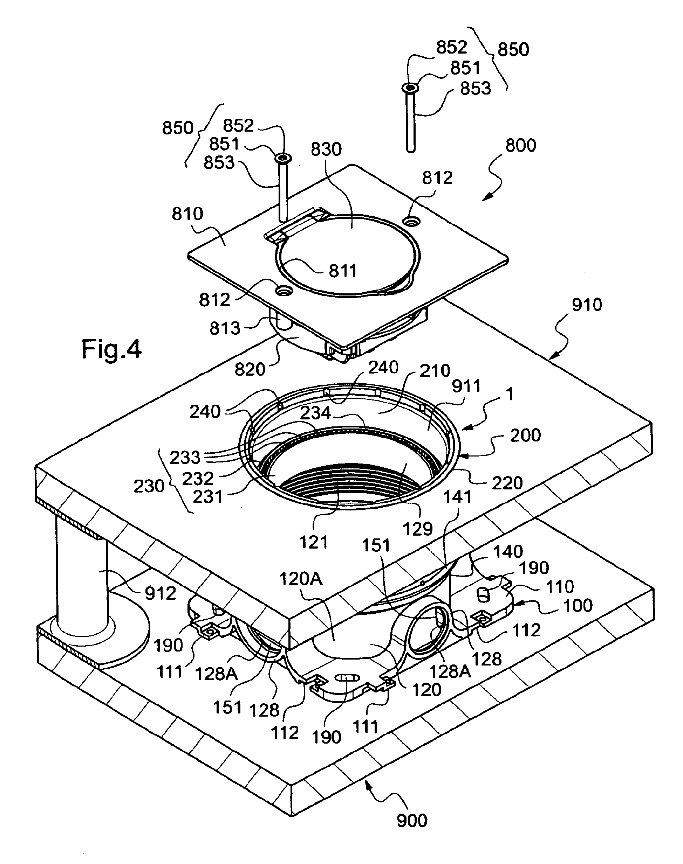

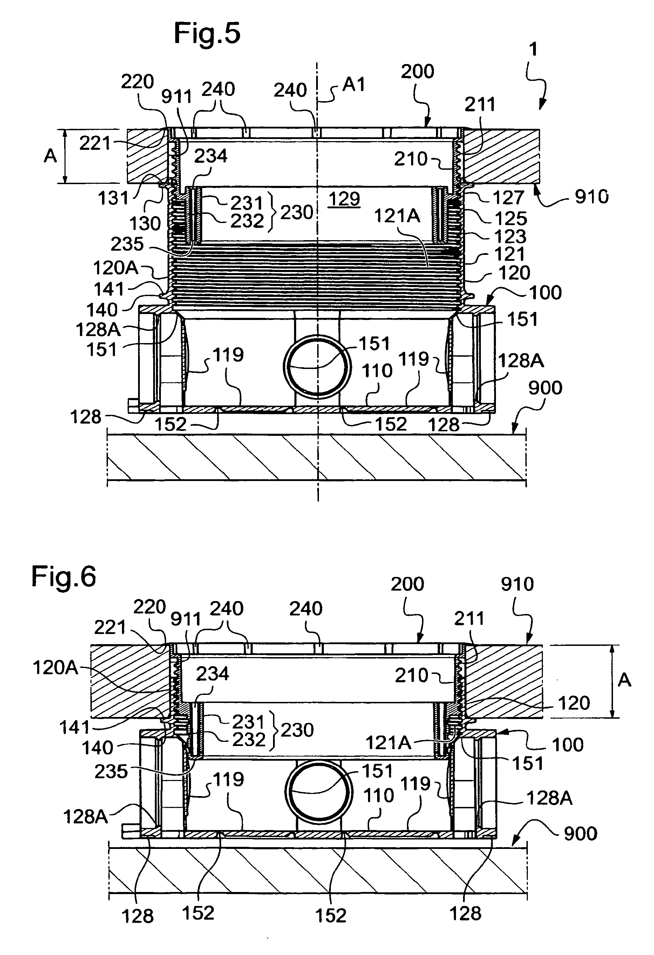

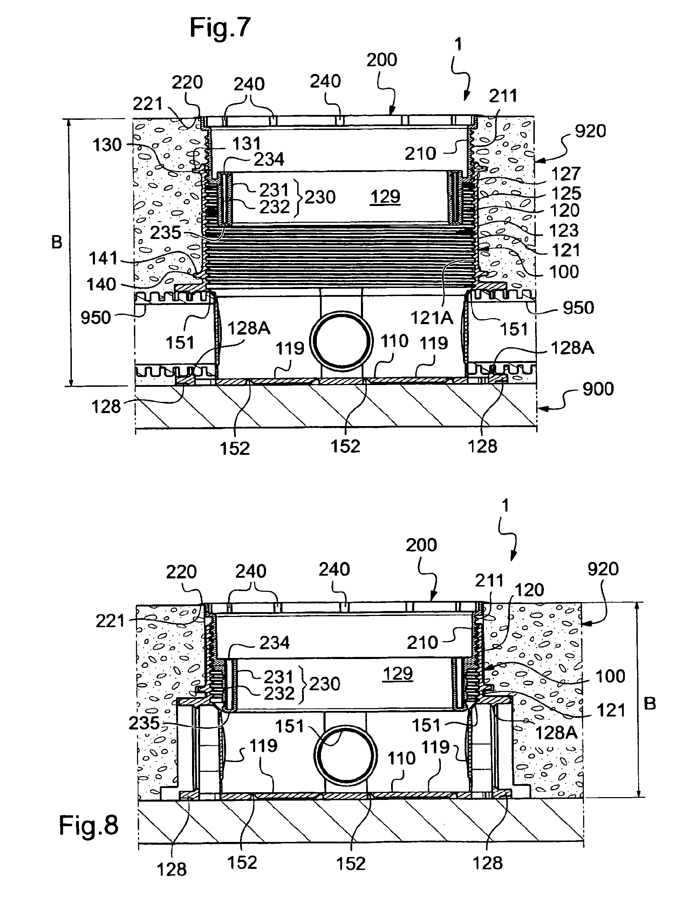

Cette boîte de sol 1 est prévue pour être encastrée soit dans une dalle de béton 920 coulée sur une paroi de sol 900 (voir figure 7), soit dans une ouverture traversante 911 pratiquée dans un plancher technique 910 (voir figure 5). Comme le montre la figure 4, on entend par « plancher technique » une paroi qui est surélevée par rapport à la paroi de sol 900 et qui est maintenue dans cette position surélevée par des pieds 912 régulièrement répartis sur la paroi de sol 900.

Comme le montre cette même figure 4, cette boîte de sol 1 est prévue pour loger le mécanisme d'un appareillage électrique 800.

Cet appareillage électrique 800 ne faisant pas l'objet de la présente invention, il ne sera pas ici décrit en détail. On remarquera cependant sur la figure 4 qu'il comporte ici un support d'appareillage 810 en forme de plaque plane carrée, et un socle 820 qui est fixé à l'arrière du support d'appareillage 810 et qui loge intérieurement le mécanisme de l'appareillage électrique. Ici, ce mécanisme est un mécanisme de prise de courant. Tel que représenté sur la figure 4, il comporte donc un puits de réception d'une fiche électrique, qui est ici caché par un couvercle basculant 830 représenté en position d'obturation d'une ouverture circulaire 811 pratiquée dans le support d'appareillage 810.

Comme le montre plus particulièrement la figure 1, cette boîte de sol 1 est ici réalisée en trois parties, dont un socle 100 à fixer sur la paroi de sol 900, une bague 200 qui est vissée sur le socle 100 de manière à pouvoir ajuster la hauteur totale de la boîte de sol 1, et un couvercle 300 qui permet de fermer hermétiquement la boîte de sol 1, par exemple pour éviter que du béton ne soit projeté à l'intérieur de cette dernière.

Dans le mode de réalisation représenté sur les figures, le socle 100, la bague 200 et le couvercle 300 sont chacun réalisés d'une seule pièce par moulage d'une matière plastique isolante.

Le socle 100 de cette boîte de sol 1 comprend une embase 110 pourvue de moyens de fixation 190 sur la paroi de sol 900, et un manchon 120 qui s'élève à partir de l'embase 110.

L'embase 110 se présente sous la forme d'une plaque sensiblement plane et carrée, centrée sur un axe principal A1. Elle présente une partie intérieure qui ferme le manchon 120 à l'arrière, et une partie extérieure qui borde le manchon 120.

Cette embase 110 est adaptée à être rapportée sur la paroi de sol 900 par sa face arrière plane. Ses moyens de fixation 190 à la paroi de sol 900 comportent au moins deux ouvertures 190 de passage de vis de fixation (non représentées) vissées dans la paroi de sol 900. Ils comportent en l'espèce quatre ouvertures 190 situées dans la partie extérieure de l'embase 110, à proximité de ses quatre coins.

Ces quatre ouvertures 190 présentent ici des formes oblongues, allongées selon des axes orthoradiaux par rapport à l'axe principal A1, de manière à faciliter le centrage de ces ouvertures 190 dans l'axe des trous de perçage pratiqués au préalable dans la paroi de sol 900 pour accueillir les vis de fixation.

Le manchon 120 comporte quant à lui une paroi cylindrique 120A qui s'élève à partir de la face avant de l'embase 110, orthogonalement à celle-ci.

Cette paroi cylindrique 120A présente ici une symétrie de révolution autour de l'axe principal A1 et comporte un diamètre extérieur légèrement inférieur à la largeur de l'embase 110. Elle délimite ainsi avec la face avant de l'embase 110 un logement intérieur 129 qui est ouvert vers l'avant pour accueillir le mécanisme 820 de l'appareillage électrique 800 (figure 4).

Telle qu'elle est représentée sur la figure 1, la bague 200 comprend un fût 210 tubulaire autour de l'axe principal A1, dont la hauteur est inférieure à la moitié de la hauteur de la paroi cylindrique 120A du manchon 120.

Ce fût 210 porte, sur toute la hauteur de sa face externe, un filetage 211 qui est vissé sur un taraudage 121A prévu sur la face interne de la paroi cylindrique 120A du manchon 120.

De cette manière, en vissant ou dévissant la bague 200 dans le manchon 120 autour de l'axe principal A1, il est possible d'ajuster la hauteur totale de la boîte de sol 1.

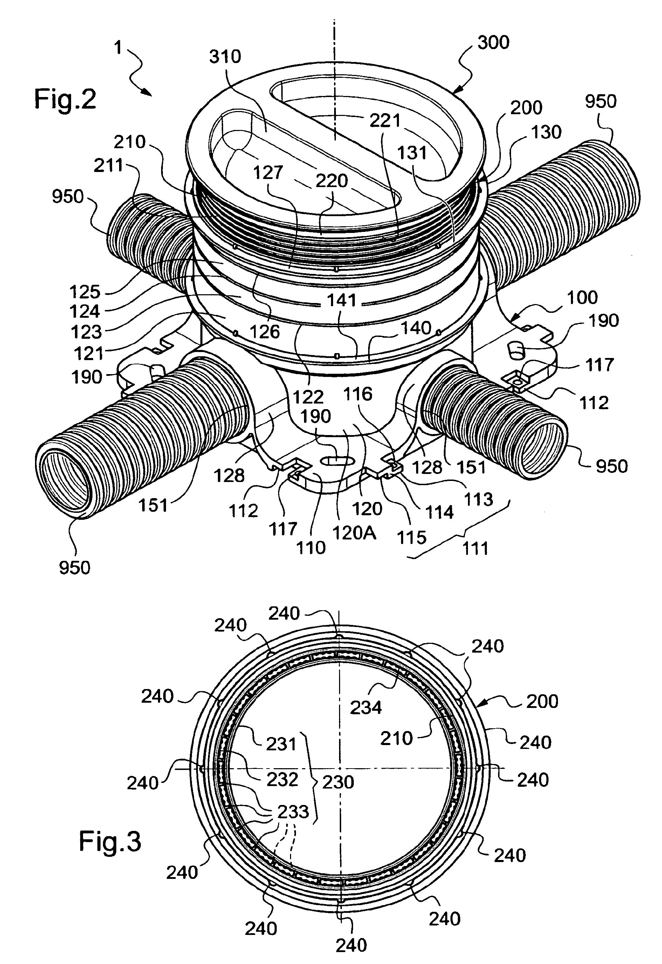

Selon une caractéristique particulièrement avantageuse de l'invention, comme le montre plus particulièrement la figure 2, le manchon 120 et la bague 200 présentent, à l'extérieur du logement intérieur 129, des faces de butées 131, 221 en regard qui sont adaptées, comme le montre la figure 5, à prendre un plancher technique 910 en sandwich.

Comme cela apparaît plus précisément sur la figure 1, la bague 200 comporte à cet effet une collerette 220 qui borde extérieurement l'extrémité avant du fût 210.

Cette collerette 220 présente une face arrière, dite face de butée 221, qui s'étend dans un plan orthogonal à l'axe principal A1 et qui est adaptée à s'appliquer sur la face avant du plancher technique 910, autour de l'ouverture 911 (voir figure 5).

Comme le montre la figure 5, cette collerette 220 présente une section axiale (dans un plan qui passe par l'axe principal A1) en forme de triangle rectangle, de sorte que son bord extérieur présente une épaisseur presque nulle. De cette manière, cette collerette 220 ne forme pas de marche sur la face avant du plancher technique 210 contre laquelle un individu pourrait buter.

Comme le montre la figure 1, le manchon 120 du socle 100 comporte quant à lui une première nervure périphérique 130 qui borde extérieurement l'extrémité avant de sa paroi cylindrique 120A.

Cette première nervure périphérique 130 présente une face avant, dite face de butée 131, qui s'étend dans un plan orthogonal à l'axe principal A1 et qui est adaptée à s'appliquer sur la face arrière du plancher technique 910, autour de l'ouverture 911 (voir figure 5).

Comme le montre la figure 5, cette première nervure périphérique 130 présente une section axiale (dans un plan qui passe par l'axe principal A1) en forme de rectangle.

Pour prendre le plancher technique 910 en sandwich, l'installateur peut alors visser la bague 200 dans le manchon 120 du socle 100, de manière à rapprocher les faces de butées 131, 221 à une distance égale à l'épaisseur de ce plancher technique 910.

Comme cela a été exposé supra, les moyens de vissage 211, 121A de la bague 200 dans le manchon 120 servent également lorsque la boîte de sol 1 est destinée à être utilisée dans une dalle de béton 920, pour ajuster la hauteur totale de cette boîte de sol 1 en fonction de l'épaisseur souhaitée de la dalle de béton 920 à couler.

Avantageusement ici, la hauteur totale de la boîte de sol 1 peut par ailleurs être ajustée autrement, de manière plus rapide et avec une amplitude plus grande.

La bague 200 et/ou le manchon 120 comporte à cet effet au moins une ligne périphérique de moindre résistance 122, 124, 126, qui permet de détacher au moins un tronçon détachable 123, 125, 127 (ou « sécables ») afin de réduire la hauteur du fût 210 de la bague 200 ou de la paroi cylindrique 120A du manchon 120.

Ici, tels que représentés sur la figure 1, le ou les tronçons détachables 123, 125, 127 sont prévus sur le manchon 120.

La paroi cylindrique 120A du manchon 120 comporte ici plus précisément un tronçon fixe 121 qui s'élève à partir de l'embase 110, et trois tronçons détachables 123, 125, 127 susceptibles d'être détachés du reste de la paroi cylindrique 120A pour réduire la hauteur du manchon 120.

Les lignes périphériques de moindre résistance 122, 124, 126, qui lient les tronçons entre eux, sont en l'espèce formées par trois rainures périphériques s'étendant en creux dans la face externe de la paroi cylindrique 120A du manchon 120, dans trois plans équidistants et orthogonaux à l'axe principal A1.

Ainsi, en cassant la paroi cylindrique 120A du manchon 120 au niveau de l'une ou l'autre de ces lignes périphériques de moindre résistance 122, 124, 126, il est possible d'ajuster plus rapidement la hauteur de la boîte de sol 1 qu'en utilisant les moyens de vissage 211, 121A.

Par ailleurs, supprimer l'un ou l'autre des tronçons détachables 123, 125, 127 permet de réduire la hauteur totale de la boîte de sol 1 avec une plus grande amplitude. On comprend en effet que la boîte de sol 1 peut présenter une hauteur particulièrement faible lorsque l'ensemble de ses tronçons détachables 123, 125, 127 ont été mis au rebut et que sa bague 200 est entièrement vissée dans le manchon 120.

Les hauteurs de la bague 200 et du tronçon fixe 121 du manchon 120 sont bien entendu prévues de telle manière que la hauteur minimale de la boîte de sol 1, lorsque l'ensemble de ses tronçons détachables 123, 125, 127 ont été mis au rebut et que sa bague 200 est entièrement vissée dans le manchon 120, reste suffisante pour lui permettre de loger le mécanisme de l'appareillage électrique 800.

Pour que le filetage 211 de la bague 200 puisse venir en prise sur le taraudage 121A du manchon 120 lorsque l'un ou l'autre des tronçons détachables 123, 125, 127 a été mis au rebut, la face interne de la paroi cylindrique 120A est ici taraudée sur toute la hauteur des tronçons détachables 123, 125, 127 et sur une partie de la hauteur du tronçon fixe 121.

Pour conserver une face de butée qui puisse s'appuyer contre la face arrière du plancher technique 920 lorsque le tronçon détachable 127 (celui qui porte la première nervure périphérique 130) a été mis au rebut, le manchon 120 comporte une seconde nervure périphérique 140.

Cette seconde nervure périphérique 140 borde à cet effet la paroi cylindrique 120A au niveau de son tronçon fixe 121.

Elle présente ici une forme identique à celle de la première nervure périphérique 130, avec une face avant, dite face de butée 141, qui s'étend dans un plan orthogonal à l'axe principal A1 et qui est adaptée à s'appliquer sur la face arrière du plancher technique 910, autour de l'ouverture 911 (voir figure 6).

Comme le montre la figure 4, la boîte de sol 1 comporte au moins une ouverture d'entrée 151 de gaine électrique 950, qui permet de tirer des câbles électriques du réseau électrique local à l'intérieur de la boîte de sol 1, afin de les connecter à l'appareillage électrique 800.

Ici, le socle 100 de la boîte de sol 1 présente quatre premières ouvertures d'entrée 151 pratiquées dans le tronçon fixe 121 de la paroi cylindrique 120A du manchon 120 (voir figure 1), et deux secondes ouvertures d'entrée 152 pratiquées dans l'embase 100, au fond du logement intérieur 129 (voir figure 5).

Comme le montre la figure 1, les premières ouvertures d'entrée 151 sont régulièrement réparties sur la paroi cylindrique 120A du manchon 120, et sont donc écartées angulairement de 90 degrés autour de l'axe principal A1. Elles sont bordées, du côté de la face externe de la paroi cylindrique 120A, par des couronnes 128 dans lesquelles peuvent s'engager les gaines électriques 950.

Pour retenir les gaines électriques 950 lorsqu'elles sont annelées, chaque couronne 128 présente intérieurement une nervure périphérique 128A sur laquelle peut s'encliqueter l'une des rainures prévues le long de la gaine électrique 950 (voir figure 7).

Comme le montre la figure 5, les secondes ouvertures d'entrée 152 sont quant à elles situées de part et d'autre de l'axe principal A1.

Ces premières et secondes ouvertures d'entrée 151 présentent toutes des diamètres standards, de tailles toutefois différentes pour pouvoir accueillir des gaines électriques 950 de diamètres différents.

Elles sont initialement fermées par des opercules défonçables 119 (voir figure 8), de manière que si l'une des ouvertures d'entrée 151 n'est pas utilisée, elle reste fermée et interdit l'accès au béton lors du coulage de la dalle.

Tel que représenté sur la figure 4, l'appareillage électrique 800 comporte deux vis de fixation 850 qui permettent de bloquer le support d'appareillage 810 sur la boîte de sol 1 et qui présentent chacune un corps fileté 853 et une tête 851 creusée d'une empreinte 852 permettant à un tournevis de manoeuvrer cette vis.

Le support d'appareillage 810 comporte en correspondance deux orifices 812 de passage des vis de fixation 850, situés de part et d'autre de l'ouverture circulaire 811. Ces deux orifices 812 présentent chacun une embouchure évasée, qui forme une portée sur laquelle peut reposer la tête 851 de la vis de fixation correspondante, de manière que celle-ci ne fasse pas saillie sur la face avant du support d'appareillage 810.

Ces deux orifices 812 sont bordés à l'arrière par des cheminées 813 de passage des corps filetés 853 des vis de fixation 850. Ces cheminées 813 présentent des hauteurs inférieures à la longueur des corps filetés 853 de ces vis de fixation 850, de manière que ces dernières puissent se visser dans des moyens d'assujettissement 230 prévus en correspondance sur la boîte de sol 1.

Ces moyens d'assujettissement 230 sont ici situés sur la bague 200 de la boîte de sol 1.

Ils comportent en l'espèce deux parois tubulaires 231, 232 concentriques à l'axe principal A1, dont une paroi extérieure 232 qui s'étend à partir de la face interne du fût 210 de la bague 200, à l'arrière de celle-ci, et une paroi intérieure 231 qui s'étend à faible distance de la paroi extérieure 232, à côté de celle-ci.

Ces deux parois tubulaires 231, 232 présentent des hauteurs identiques et sont raccordées ensemble par une paroi de fond annulaire 235 (voir figure 6), qui s'étend entre leurs bords d'extrémité arrière. Elles délimitent ainsi avec cette paroi de fond annulaire 235 un espace annulaire de vissage 234 qui est ouvert vers l'avant et dans lequel peuvent se visser les corps filetés 853 des vis de fixation 850 de l'appareillage électrique 800.

Grâce à la forme annulaire de cet espace, les vis de fixation 850 peuvent se visser dans la bague 200, quelle que soit l'orientation du support d'appareillage 810 par rapport à la bague 200 autour de l'axe principal A1.

Avantageusement, comme le montre la figure 3, les faces en vis-à-vis de ces parois tubulaires 231, 232 présentent des ondulations autour de l'axe principal A1, qui forment ensemble une pluralité de rétrécissements de largeur de l'espace annulaire de vissage 234 et qui permettent ainsi de maximiser la surface dans laquelle les corps filetés 853 des vis de fixation 850 peuvent se visser.

Ici avantageusement, pour rigidifier ces deux parois tubulaires 231, 232 afin d'éviter qu'elles puissent s'écarter l'une de l'autre et libérer les vis de fixation 850 qui y sont vissées, la bague 200 comporte au moins trois parois radiales 233 de jonction de ces deux parois tubulaires 231, 232.

Ces parois radiales 233, ici au nombre de 30, s'étendent dans des plans contenant l'axe principal A1, à l'intérieur de l'espace annulaire de vissage 234. Elles sont régulièrement réparties autour de l'axe principal A1 et présentent des épaisseurs réduites, inférieures ou égales à celles des parois tubulaires 231, 232.

Telle que représentée sur la figure 1, la boîte de sol 1 comporte des moyens d'assemblage avec une autre boîte de sol 1 du même type qu'elle, en position juxtaposée.

En l'espèce, l'embase 110 du socle 100 comporte, en creux et en saillie de chacun de ses quatre bords, un élément mâle 111 et un élément femelle 112 de formes complémentaires.

Tel que représenté sur la figure 2, chaque élément mâle 111 présente une forme d'escalier s'étendant le long de la tranche du bord correspondant de l'embase 110 du socle 100, avec une marche inférieure 113, une contremarche 114 et une marche supérieure 115. La face arrière de la marche inférieure 113 s'étend dans le plan de la face arrière de l'embase 110 tandis que la face avant de la marche supérieure 115 s'étend dans le plan de la face avant de l'embase 110. La face avant de la marche inférieure 113 et la face arrière de la marche supérieure 115 présentent par ailleurs chacune un pion hémisphérique 116 en saillie.

Les éléments femelles 112, situés en creux dans la tranche de l'embase 110 du socle 100, présentent en négatif des formes identiques à celles des éléments mâles 111. Elles présentent ainsi en particulier des cavités hémisphériques 117 dans lesquelles peuvent se loger les pions hémisphériques 116 des éléments mâles 111.

Ainsi, lorsque deux boîtes de sol 1 du même type sont rapportées en position juxtaposée, c'est-à-dire de telle sorte que leurs embases 110 se retrouvent bord à bord, les éléments mâles 111 correspondants de ces embases 110 s'engagent dans les éléments femelles 112 qui leurs sont associés. Leurs pions hémisphériques 116 se logent alors dans les cavités hémisphériques 117 de ces éléments femelles 112, ce qui bloque les boîtes de sol 1 en position juxtaposée. Ainsi, lorsque l'une des boîtes de sol 1 est fixée à la paroi de sol 900, il est possible de fixer l'autre boîte de sol 1 en n'utilisant que ses moyens d'assemblage 111, 112.

Comme le montrent les figures 1 et 2, le couvercle 300 permet d'obturer temporairement l'extrémité avant de la bague 200, de manière à fermer hermétiquement le logement intérieur 129 de la boîte de sol 1 lors de l'installation de cette boîte de sol.

Ce couvercle 300 se présente sous la forme d'une plaque circulaire de faible épaisseur et de diamètre légèrement supérieur à celui de la bague 200.

Il présente deux renfoncements 320 en creux dans sa face avant et en forme de demi-lunes, situés de manière symétrique par rapport à l'axe principal A1.

Ces deux renfoncements 320 sont situés à distance l'un de l'autre pour délimiter entre eux une traverse 310 qui facilite la préhension et la manoeuvre de ce couvercle 300.

Le couvercle 300 étant formé par une plaque, les deux renfoncements 320 forment deux renflements 321 en demi-lunes et en saillie sur sa face arrière.

Ces deux renflements 321 en demi-lunes sont circonscrits dans un cylindre de révolution autour de l'axe principal A1 de diamètre égal, au jeu près, au diamètre intérieur du fût 210 de la bague 200.

Ainsi, lorsque le couvercle 300 est engagé sur la bague 200, ses renflements 321 viennent en appui contre la face interne du fût 210 de la bague 200, ce qui permet de le maintenir en position dans la bague 200 lors du coulage de la dalle de béton 920.

Avantageusement la bague 200 comporte des moyens de blocage en rotation 240 du couvercle 300 autour de l'axe principal A1.

Ces moyens de blocage sont en l'espèce constitués par des rainures 240 d'axes parallèles à l'axe principal A1, qui s'étendent en creux dans la face interne du fût 210 de la bague 200, à partir de son extrémité avant sur une faible hauteur. Ces rainures 240, au nombre de 10, sont régulièrement réparties autour de l'axe principal A1.

Le couvercle 300 comporte en correspondance dix ergots (non visibles sur les figures) qui s'étendent en saillie de sa face arrière, tout autour des renflements 321, et qui sont agencés pour se loger dans ces rainures 240.

Le montage de la boîte de sol 1 sur un plancher technique 910 sera maintenant décrit en référence aux figures 5 et 6. Il se décompose en quatre opérations principales.

La première opération consiste pour l'installateur à percer une ouverture traversante 911 de diamètre adéquat dans le plancher technique 910, par exemple à l'aide d'une scie cloche.

La seconde opération consiste à ajuster la hauteur de la boîte de sol 1, de telle manière que les faces de butée 131, 141, 221 du socle 100 et de la bague 200 puissent être placées à une distance l'une de l'autre égale à l'épaisseur A du plancher technique 910.

En pratique, si cette épaisseur A est faible (voir figure 5), l'installateur rapporte directement la boîte de sol 1 dans l'ouverture traversante 911.

En revanche, si l'épaisseur A est plus importante (voir figure 6), il peut s'avérer nécessaire de retirer au moins l'un des tronçons détachables 123, 125, 127 de la paroi latérale 120A du manchon 120 du socle 100 avant de rapporter la boîte de sol 1 dans cette ouverture traversante 911. La première nervure périphérique 130 est alors mise au rebut avec le tronçon 127 auquel elle appartient.

La troisième opération consiste à installer la boîte de sol 1 dans l'ouverture traversante 911. Pour cela, l'installateur positionne le socle 100 sous le plancher technique 910, dans l'axe de son ouverture traversante 911. Il engage ensuite les extrémités de la ou des gaines électriques 950 au travers des ouvertures d'entrée 151, 152 prévues dans le manchon 120 et dans l'embase 110, en cassant les opercules défonçables des ouvertures d'entrée 151, 152 utilisées. Il rapporte enfin la bague 200 dans l'ouverture traversante 911, par l'avant du plancher technique 910, de manière à pouvoir visser la bague 200 dans le socle 100 jusqu'à ce que leurs faces de butée 131, 141, 221 viennent au contact du plancher technique 910.

Une fois installée, le logement intérieur 129 de la boîte de sol 1 présente une profondeur suffisante pour accueillir le mécanisme de l'appareillage électrique 800, quel que soit le nombre de tronçons détachables ayant été retirés et la position de la bague 200 dans le manchon 120 du socle 100.

L'opération de vissage est simplifiée par le couvercle 300 qui est bloqué en rotation sur la bague 200 et dont la manoeuvre est facilitée par la traverse 310.

Le couvercle 300 est ensuite mis au rebut.

La quatrième et dernière opération, illustrée sur la figure 4, consiste à rapporter l'appareillage électrique 800 dans la boîte de sol 1, à le connecter aux câbles électriques sortant des gaines électriques 950, et à le fixer rigidement à l'aide des deux vis de fixation 850.

L'installation de cette boîte de sol 1 sur une paroi de sol 900 à recouvrir d'une dalle de béton 920 sera quant à elle décrite en référence aux figures 7 et 8. Elle se décompose en cinq opérations principales.

La première opération consiste pour l'installateur à fixer l'embase 110 du socle 100 sur la paroi de sol 900 au moyen de quatre vis de fixation engagées au travers de ses quatre ouvertures 190.

La seconde opération consiste à ajuster la hauteur totale de la boîte de sol 1 en supprimant, si cela s'avère nécessaire, un ou plusieurs tronçons détachables 123, 125, 127 (figure 8).

Cette opération est initiée de manière rapide et grossière, à l'aide des tronçons détachables 123, 125, 127, puis de manière plus fine et plus lente, à l'aide des moyens de vissage 121A, 211. Le vissage de la bague 200 dans le socle 100 est ici également facilité par le couvercle 300, qui est ensuite laissé en place sur la bague 200.

La troisième opération consiste à engager les extrémités de la ou des gaines électriques 950 au travers des ouvertures d'entrée 151 prévues dans le manchon 120 du socle 100, en cassant les opercules défonçables des ouvertures d'entrée 151 utilisées.

La quatrième opération consiste à couler de manière classique la dalle de béton 920 sur la paroi de sol 900, autour de la boîte de sol 1, jusqu'à ce que cette dalle affleure la collerette 220 de la bague 200.

La cinquième et dernière opération, consiste à rapporter l'appareillage électrique dans la boîte de sol 1, à le connecter aux câbles électriques sortant des gaines électriques 950 et à le fixer rigidement à l'aide de deux vis de fixation.

La présente invention n'est nullement limitée au mode de réalisation décrit et représenté, mais l'homme du métier saura y apporter toute variante conforme à son esprit.

En particulier, on pourrait prévoir que la boîte de sol soit réalisée en un plus grand nombre de parties distinctes. A titre d'exemple, le socle pourrait être réalisé en deux parties (le manchon et l'embase) encliquetées l'une sur l'autre.

Encore variante, on pourrait prévoir que les moyens d'assujettissement de l'appareillage électrique sur la boîte de sol soient portés, non pas par la bague, mais par le socle lui-même. Ils pourraient en particulier se présenter sous la forme de deux puits de vissage parallèles, s'élevant à partir de l'embase, à l'intérieur du manchon, jusqu'à une hauteur telle que les deux vis de fixation de l'appareillage électrique puissent s'y visser.

Sur les figures, la boîte de sol 1 est représentée équipée d'un couvercle 300. Bien entendu, on pourrait prévoir que la boîte de sol soit dépourvue d'un tel couvercle. L'opération de coulage de la dalle de béton pourrait alors être réalisée classiquement, en obturant la bague avec du papier pour éviter les projections de béton dans le logement intérieur de la boîte.

Selon une autre variante, on pourrait prévoir que les moyens de fixation de l'embase sur la paroi de sol présentent une architecture différente. Ils pourraient par exemple comporter un aimant logé dans l'embase, au centre de celle-ci, de manière à bloquer la boîte de sol sur la paroi de sol lorsque cette dernière intègre une banche métallique.

## Revendications

1. Boîte de sol (1) pour appareillage électrique, comprenant :
- une embase (110) pourvue de moyens de fixation (190) sur une paroi de sol (900),
- un manchon (120) qui s'élève à partir de l'embase (110), qui délimite un logement intérieur (129), et qui est réalisé d'une seule pièce, et
- une bague (200) équipée de moyens de vissage (211) vissés, sur le manchon (120),
**caractérisée en ce que** le manchon (120) et la bague (200) présentent, à l'extérieur du logement de réception (129), des faces de butées (131, 221) en regard adaptées à prendre un plancher technique (910) en sandwich.

2. Boîte de sol (1) selon la revendication précédente, dans laquelle les moyens de vissage de la bague (200) comportent un filetage (211) vissé sur un taraudage (121A) prévu à l'intérieur du manchon (120).

3. Boîte de sol (1) selon l'une des revendications précédentes, dans laquelle la bague (200) comporte un fût (210) qui porte les moyens de vissage (211) et une collerette (220) qui borde extérieurement une extrémité du fût (210) et qui porte l'une desdites faces de butée (221).

4. Boîte de sol (1) selon l'une des revendications précédentes, dans laquelle le manchon (120) comporte une paroi cylindrique (120A) sur laquelle sont vissés les moyens de vissage (211) de la bague (200), et une première nervure périphérique (130) qui borde extérieurement la paroi cylindrique (120A) et qui porte l'une desdites faces de butée (131).

5. Boîte de sol (1) selon l'une des revendications précédentes, dans laquelle la bague (200) et/ou le manchon (120) comporte au moins un tronçon détachable (123, 125, 127) à partir d'une ligne périphérique de moindre résistance (122).

6. Boîte de sol (1) selon la revendication précédente, dans laquelle chaque tronçon détachable (123, 125, 127) appartient au manchon (120).

7. Boîte de sol (1) selon les revendications 4 et 6, dans laquelle le manchon (120) comporte une seconde nervure périphérique (140) qui borde extérieurement la paroi cylindrique (120A), qui est située à l'opposé de la première nervure périphérique (130) par rapport à la ligne périphérique de moindre résistance (122), et qui présente une face de butée (141) tournée vers la face de butée (221) de la bague (200).

8. Boîte de sol (1) selon l'une des deux revendications précédentes, dans laquelle le manchon (120) et/ou l'embase (110) présente au moins une ouverture d'entrée (151) de gaine électrique (950).

9. Boîte de sol (1) selon l'une des revendications précédentes, dans laquelle, l'embase (110) comporte une partie extérieure qui borde extérieurement le manchon (120) et qui présente au moins deux ouvertures (190) d'accueil d'éléments de fixation de l'embase (110) sur la paroi de sol (900).

10. Boîte de sol (1) selon l'une des revendications précédentes, dans laquelle la bague (200) comporte des moyens d'assujettissement (230) d'un appareillage électrique (800).

11. Boîte de sol (1) selon la revendication précédente, dans laquelle les moyens d'assujettissement (230) comportent deux parois tubulaires concentriques (231, 232) qui définissent entre elles un espace annulaire de vissage (234) dans lequel peuvent se visser des vis de fixation (850) dudit appareillage électrique (800).

12. Boîte de sol (1) selon la revendication précédente, dans laquelle les moyens d'assujettissement (230) comportent au moins trois parois radiales (233) qui relient lesdites deux parois tubulaires concentriques (231, 232) et qui sont régulièrement réparties dans ledit espace annulaire de vissage (234).

13. Boîte de sol (1) selon l'une des revendications précédentes, comportant un couvercle (300) adapté à fermer la bague (200).

14. Boîte de sol (1) selon la revendication précédente, dans laquelle la bague (200) comporte des moyens de blocage en rotation (240) du couvercle (300) autour de l'axe (A1) desdits moyens de vissage (211).

## Claims

1. A floor box (1) for electrical equipment, said floor box comprising:
• a base (110) that is provided with fastener means (190) for fastening on a floor slab (900);
• a sleeve (120) that rises from the base (110), that defines an inner housing (129), and that is made as a single piece; and
• a ring (200) that is equipped with screw-fastener means (211) that are screw-fastened on the sleeve (120);
the floor box being **characterized in that**, outside the reception housing (129), the sleeve (120) and the ring (200) present facing abutment faces (131, 221) that are adapted to sandwich a raised floor (910).

2. A floor box (1) according to the preceding claim, wherein the screw-fastener means of the ring (200) comprise a thread (211) that is screw-fastened in tapping (121A) that is provided inside the sleeve (120).

3. A floor box (1) according to any preceding claim, wherein the ring (200) comprises a cylinder (210) that carries the screw-fastener means (211), and a collar (220) that externally borders an end of the cylinder (210) and that carries one of said abutment faces (221).

4. A floor box (1) according to any preceding claim, wherein the sleeve (120) comprises a cylindrical wall (120A) onto which the screw-fastener means (211) of the ring (200) are screw-fastened, and a first peripheral rib (130) that externally borders the cylindrical wall (120A) and that carries one of said abutment faces (131).

5. A floor box (1) according to any preceding claim, wherein the ring (200) and/or the sleeve (120) includes at least one detachable segment (123, 125, 127) that is detachable from a peripheral line of weakness (122).

6. A floor box (1) according to the preceding claim, wherein each detachable segment (123, 125, 127) forms part of the sleeve (120).

7. A floor box (1) according to claim 4 and claim 6, wherein the sleeve (120) includes a second peripheral rib (140) that externally borders the cylindrical wall (120A), that is situated on a side of the peripheral line of weakness (122) that is opposite from the side on which the first peripheral rib (130) is situated, and that presents an abutment face (141) that is turned towards the abutment face (221) of the ring (200).

8. A floor box (1) according to any one of the two preceding claims, wherein the sleeve (120) and/or the base (110) presents at least one inlet opening (151) for electrical sheathing (950).

9. A floor box (1) according to any preceding claim, wherein the base (110) includes an outer portion that externally borders the sleeve (120) and that presents at least two openings (190) for receiving fastener elements for fastening the base (110) on the floor slab (900).

10. A floor box (1) according to any preceding claim, wherein the ring (200) includes securing means (230) for securing electrical equipment (800).

11. A floor box (1) according to the preceding claim, wherein the securing means (230) comprise two concentric tubular walls (231, 232) that define between them an annular screw-fastening space (234) in which fastener screws (850) of said electrical equipment (800) may be screw-fastened.

12. A floor box (1) according to the preceding claim, wherein the securing means (230) include at least three radial walls (233) that connect said two concentric tubular walls (231, 232) together and that are distributed regularly in said annular screw-fastening space (234).

13. A floor box (1) according to any preceding claim, including a cover (300) that is adapted to close the ring (200).

14. A floor box (1) according to the preceding claim, wherein the ring (200) includes turn-prevention means (240) for preventing the cover (300) from turning about the axis (A1) of said screw-fastener means (211).

## Patentansprüche

1. Bodendose (1) für elektrische Gerätemechanismen, mit:
- einem Sockel (110) mit Befestigungsmitteln (190) zum Befestigen auf einer Bodenwand (900),
- einer Buchse (120), die sich vom Sockel (110) ausgehend erhebt und in ihrem Innenraum eine Aufnahme (129) abgrenzt und aus einem einzigen Teil gefertigt ist, und
- einem Ring (200) mit Schraubverbindungen (211), die auf die Buchse (120) geschraubt sind,
- **dadurch gekennzeichnet, dass** die Buchse (120) und der Ring (200) außerhalb der Aufnahme (129) gegenüberliegend Anschlagseiten (131, 221) aufweisen, die einen Installationsboden (910) einklemmen können.

2. Bodendose (1) nach vorausgehendem Anspruch, bei der die Schraubverbindungen des Rings (200) ein auf einen Gewindegang (121A) auf der Innenseite der Buchse (120) geschraubtes Gewinde (211) umfassen.

3. Bodendose (1) nach einem der vorausgehenden Ansprüche, bei der der Ring (200) einen Schaft (210) umfasst, der die Schraubverbindungen (211) und einen Bund (220) hält, welcher ein Schaftende (210) außen umrundet und eine der Anschlagseiten (221) abstützt.

4. Bodendose (1) nach einem der vorausgehenden Ansprüche, bei der die Buchse (120) eine zylinderförmige Wand (120A) umfasst, an der die Schraubverbindungen (211) des Rings (200) festgeschraubt sind, sowie eine erste periphere Rippe (130), die die zylinderförmige Wand (120A) außen umrundet und eine der Anschlagseiten (131) abstützt.

5. Bodendose (1) nach einem der vorausgehenden Ansprüche, bei der der Ring (200) und/oder die Buchse (120) mindestens einen ausgehend von einer peripheren Linie mit geringerem Widerstand (122) abtrennbaren Abschnitt (123, 125, 127) umfassen.

6. Bodendose (1) nach vorausgehendem Anspruch, bei dem jeder abtrennbare Abschnitt (123, 125, 127) zur Buchse (120) gehört.

7. Bodendose (1) nach den Ansprüchen 4 und 6, bei dem die Buchse (120) eine zweite periphere Rippe (140) umfasst, die die zylinderförmige Wand (120A) außen umrundet und die sich in Bezug zur peripheren Linie mit geringerem Widerstand (122) in entgegengesetzter Richtung zur ersten peripheren Rippe (130) befindet, und eine Richtung Anschlagseite (221) des Rings (200) gerichtete Anschlagseite (141) aufweist.

8. Bodendose (1) nach einem der beiden vorausgehenden Ansprüche, bei dem die Buchse (120) und/oder der Sockel (110) mindestens eine Eingangsöffnung (151) für einen Kabelmantel (950) aufweisen.

9. Bodendose (1) nach einem der vorausgehenden Ansprüche, bei dem der Sockel (110) einen äußeren Bereich umfasst, der die Buchse (120) außen umrundet und mindestens zwei Aufnahmeöffnungen (190) für Befestigungselemente des Sockels (110) an der Bodenwand (900) aufweist.

10. Bodendose (1) nach einem der vorausgehenden Ansprüche, bei dem der Ring (200) Sicherungsmittel (230) für einen elektrischen Gerätemechanismus (800) umfasst.

11. Bodendose (1) nach vorausgehendem Anspruch, bei dem die Sicherungsmittel (230) zwei konzentrische Rohrwände (231, 232) umfassen, die zueinander einen ringförmigen Raum zum Schrauben (234) definieren, in den die Befestigungsschrauben (850) des elektrischen Gerätemechanismus (800) geschraubt werden können.

12. Bodendose (1) nach vorausgehendem Anspruch, bei der die Sicherungsmittel (230) mindestens drei radiale Wände (233) umfassen, die die beiden konzentrischen Rohrwände (231, 232) miteinander verbinden und im ringförmigen Raum zum Schrauben (234) gleichmäßig verteilt sind.

13. Bodendose (1) nach einem der vorausgehenden Ansprüche mit einem Deckel (300) zum Schließen des Rings (200).

14. Bodendose (1) nach vorausgehendem Anspruch, bei der der Ring (200) um die Achse (A1) der Schraubverbindungen (211) drehbare Klemmmittel (240) umfasst.
